# EUROPÄISCHE PATENTSCHRIFT

(11) **EP 1 155 782 B1**
(45) Veröffentlichungstag und Bekanntmachung des Hinweises auf die Patenterteilung: **28.07.2010**
(21) Anmeldenummer: 01110639.0
(22) Anmeldetag: 02.05.2001
(51) Int. Cl.: B25B 11/00, B23Q 1/03

(54) **Halterungsvorrichtung mit einem Trägerkopf zum Halten eines Werkstücks**
Support device with a carrier head for holding a workpiece
Dispositif de support avec une tête de soutien pour tenir une piéce à travailler

(30) Priorität: 15.05.2000 DE 10023598
(43) Veröffentlichungstag der Anmeldung: 21.11.2001
(73) Patentinhaber: Junker & Partner GmbH, 66636 Tholey (DE)
(72) Erfinder: Junker, Franz-Rudolf, 66636 Tholey-Sotzweiler (DE)
(74) Vertreter: Bernhardt, Winfrid

(56) Entgegenhaltungen:
- EP-A- 1 043 116
- WO-A-99/30868
- DE-A- 19 716 874
- DE-U- 29 717 355
- US-A- 2 624 107
- US-A- 4 951 931

## Beschreibung

Die Erfindung betrifft eine Halterungsvorrichtung zum Halten eines Werkstücks, insbesondere Karosseriebauteile, in einer Bezugsposition, gemäß Oberbegriff des Anspruchs 1.

Aus der US 4,951,931 ist ein derartiger Trägerkopf bekannt, bei dem die das Kontaktelement umfassende Baueinheit an drei Seiten gegen Abstandsstücke anliegt, die zwischen der Baueinheit und L-förmigen, mit einem Befestigungsarm verbundenen Blöcken angeordnet sind. Durch die Abstandstücke lässt sich die Position der Baueinheit in drei zueinander senkrechten Raumrichtungen verstellen.

Aus der DE 297 17 355 U1 geht eine Halterungsvorrichtung hervor, die einen säulenartigen Ständer mit einem Befestigungsfuß und einem am oberen Ende des Ständers angeordneten Kopfflansch aufweist, an dem die das Kontaktelement umfassende Baueinheit anbringbar ist. Durch den Einsatz von Abstandsstücken zwischen dem Flansch und der Baueinheit kann die Höhe des Kontaktelements eingestellt werden. In den beiden weiteren Raumrichtungen kann die Position des Kontaktelements verändert werden, indem die gesamte Halterungsvorrichtung auf einer unter ihm angeordneten Montageplatte verschoben wird. Um die Verschiebung und eine Arretlerung des Fußes auf der Platte zu ermöglichen, sind der Befestigungsfuß und die Montageplatte mit senkrecht zueinander verlaufenden Nuten und entsprechenden Befestigungsvorrichtungen versehen.

Weitere Haltevorrichtungen mit einem Kontaktelement, dessen Position unter Verwendung von Abstandstücken einstellbar ist, gehen aus der WO 99/30868 und DE 197 16 874 A1 hervor.

Der vorliegenden Erfindung liegt die Aufgabe zugrunde, einen neuen Trägerkopf gemäß Oberbegriff des Anspruchs 1 zu schaffen, dessen Verstellung des Trägerkopfes vereinfacht ist.

Diese Aufgabe wird durch die im kennzeichnenden Teil des Anspruchs 1 angegebenen Merkmale gelöst.

Vorteilhaft braucht die mit ihrem Kontaktelement gegen das Werkstück anlegbare Baueinheit zu ihrer Positionsverstellung in der dritten Raumrichtung nicht von den für die Position in der Plattenebene maßgebenden Abstandsstücken gelöst zu werden.

Der Satz von Abstandsstücken kann z.B. Abstandsstücke mit in einer Raumrichtung um eine Rasterlänge abgestuften Abmessungen umfassen, z.B. in Stufen von 0,1 mm oder 0,01 mm.

Der Trägerkopf kann eine an das Basisteil anlegbare Grundplatte aufweisen, wobei auf diese Grundplatte ein dazu vorzugsweise deckungsgleiches, plattenförmiges Abstandsstück aufsetzbar ist.
Zweckmäßig sind das plattenförmige Abstandsstück und ggf. die Zwischenplatte, vorzugsweise durch Schrauben, auf der Grundplatte fixierbar.

Die das Kontaktelement umfassende Baueinheit kann auf der Zwischenplatte, vorzugsweise durch Schrauben, fixierbar sein, wobei ein Fußteil der Baueinheit vorzugsweise als Fußplatte ausgebildet ist, in der Durchgangsbohrungen für diese Schrauben vorgesehen sind, und wobei der Bohrungsdurchmesser größer als der Schaffdurchmesser der Schrauben ist, so dass zur Verstellung der Baueinheit eine Verschiebung der Baueinheit auf der Zwischenplatte möglich ist.

Die zur Verstellung der Baueinheit in der Plattenebene vorgesehenen Abstandsstücke können zwischen von der Zwischenplatte vorstehenden Anschlagbacken und der Baueinheit, vorzugsweise durch Schrauben, die durch ein Langloch in den Anschlagbacken geführt sind, fixierbar sein.

Diese in ein Gewinde in der Fußplatte eingreifenden Schrauben, sowie auch alle vorangehend genannten Schrauben weisen in bevorzugter Ausgestaltung der Erfindung einen Schraubenkopf auf, der nur durch ein Spezialwerkzeug zu drehen ist. Ungewolltes Lösen der Schrauben und damit eine Veränderung der Feineinstellung können so vermieden werden.

Es versteht sich, dass die Durchgangsbohrungen in der Fußplatte durch die Köpfe der Befestigungsschrauben übergriffen werden.

Die Erfindung soll nun anhand eines Ausführungsbeispiels und der beiliegenden, sich auf dieses Ausführungsbeispiel beziehenden Zeichnungen näher erläutert werden. Es zeigen:
- Fig. 1: eine Werkstückhalterung, in welcher Trägerköpfe nach der Erfindung ver- wendet sind,
- Fig. 2: ein Ausführungsbeispiel für einen auf einer Trägersäule einer Werkstückhalte- rung montierten Trägerkopf nach der Erfindung in einer perspektivischen An- sicht,
- Fig. 3: einen Teil eines Trägerkopfes von Fig. 2 in einer perspektivischen Ansicht, und
- Fig. 4: den Trägerkopf von Fig. 3 in einer Draufsicht.

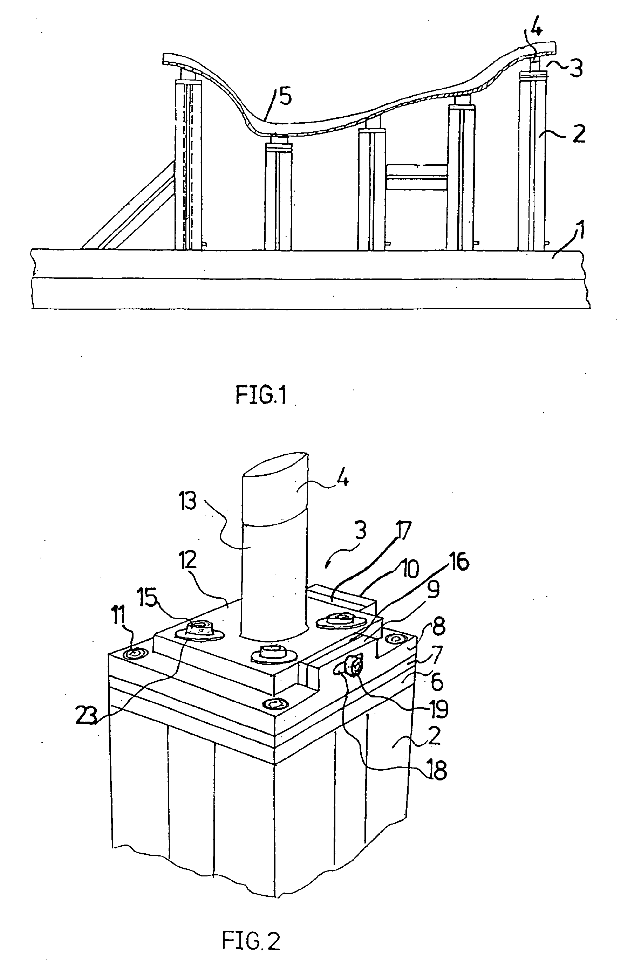

Mit dem Bezugszeichen 1 ist in Fig. 1 eine Trägerplatte einer Werkstückhalterung bezeichnet, von der sich an mehreren Stellen vertikale Trägersäulen 2 erstrecken. Die Trägersäulen sind auf der Trägerplatte mit Hilfe nicht gezeigter Befestigungseinrichtungen in gewünschten Positionen fixierbar. An den oberen Enden der Trägersäulen 2 sind Trägerköpfe 3 mit jeweils einem Kontaktelement 4 angebracht. Die Kontaktelemente 4 der Trägerköpfe 3 bilden Stützstellen für ein auf die Halterung aufgelegtes Werkstück 5. Bei dem Werkstück 5 handelt es sich in dem gezeigten Ausführungsbeispiel um ein Blechformteil einer Autokarosserie. Klemmeinrichtungen, welche das Werkstück gegen die Trägerköpfe drücken, sind in Fig. 1 nicht gezeigt. Die gezeigte Vorrichtung könnte auch als Schweißhalterung dienen.

Während die Säulen 2 mit den Trägerköpfen 3 in Annäherung an die gewünschten Positionen auf der Trägerplatte 1 fixierbar sind, kann die räumliche Lage der Kontaktelemente 4 zur Feineinstellung der Werkstückhalterung, d.h. zur genauen Anpassung der Position der Kontaktelemente an die Sollmaße des Werkstücks in den drei Raumrichtungen verstellt werden, d.h. in vertikaler Richtung wie auch in zwei zueinander senkrechten horizontalen Richtungen.

Es wird nun auf die Fig. 2 Bezug genommen, wo mit dem Bezugszeichen 6 eine Grundplatte eines Trägerkopfs 3, der ein Kontaktelement 4 aufweist, bezeichnet ist.

Auf der Grundplatte 6 liegt ein plattenförmiges Abstandsstück 7 auf, auf welchem seinerseits eine weitere, eine Zwischenplatte 8 bildende Platte aufliegt. Die Zwischenplatte 8 weist an zwei Rändern vorstehenden Anschlagbacken 9 und 10 auf.

In dem gezeigten Ausführungsbeispiel sind die Grundplatte 6, das plattenförmige Abstandsstück 7 und die Zwischenplatte 8 zueinander deckungsgleich. An den vier Ecken der Grundplatte 6, des Abstandsstücks 7 und der weiteren Platte 8 sind Bohrungen 22 für Schrauben 11 vorgesehen, über die die genannten drei Teile unter Fixierung des Abstandsstücks 7 zwischen der Grundplatte 6 und der Zwischenplatte 8 mit der Trägersäule 2 verschraubt sind.

Das Kontaktelement 4 ist Bestandteil einer Baueinheit, die neben dem Kontaktelement eine Fußplatte 12 und einen von der Fußplatte vorstehenden, mit dieser einstückig verbundenen Trägeransatz 13 umfaßt. Die Fußplatte weist vier Bohrungen 14 für Schrauben 15 auf, welche jeweils in ein Gewinde in der weiteren Zwischenplatte 8 eingreifen. Der Durchmesser dieser Bohrungen 14 ist größer als der Durchmesser der Schrauben 15, so daß die Fußplatte 12 auf der weiteren Platte 8 in gewissen Grenzen verschiebbar ist. Der Durchmesser des Schraubenkopfs der Schrauben 15 ist durch scheibenförmige Ansätze 23 derart aufgeweitet, daß er die Bohrungen 14 übergreift und abdeckt.

In dem gezeigten Ausführungsbeispiel weisen die Schraubenköpfe der Schrauben 11 und 15 eine Eingriffsvertiefung für ein Spezialwerkzeug auf, d.h. die Schrauben können nicht mit einem Standardwerkzeug, wie z.B. einem Schraubendreher oder Sechskantdrehwerkzeug gelöst werden.

Mit den Bezugszeichen 16 und 17 sind weitere Abstandsstücke bezeichnet, die zwischen den Anschlagbacken 9 und 10 und jeweils einer Randfläche der Fußplatte 12 angeordnet sind. Die Anschlagbacken 9 und 10 weisen jeweils ein Langloch 18 für eine Schraube 19 auf, die in eine zu der jeweiligen Randfläche öffnende Bohrung in der Fußplatte 12 eingreift. Entsprechend sind die Abstandsstücke 16,17 mit einer Durchgangsbohrung für die Schraube 19 versehen.

Auch die Schrauben 19 weisen einen nur durch ein Spezialwerkzeug drehbaren Schraubenkopf auf.

Während das Kontaktelement 4 und die Abstandsstücke 7, 16 und 17 sowie die genannten Schrauben aus Stahl bestehen, sind alle übrigen Teile des Trägerkopfes 3 in dem gezeigten Ausführungsbeispiel aus Aluminium hergestellt. Die Stahlteile unterliegen einer geringeren Abnutzung als die Aluminiumteile, was insbesondere für das Kontaktelement 4 von Bedeutung ist.

Die Abstandsstücke 7, 16 und 17 sind Teile eines der Vorrichtung zugehörigen Satzes von Abstandsstücken, die sich jeweils in der Plattendicke unterscheiden und z.B. in einer Rasterdicke von 0,1 mm oder nur 0,01 mm abgestuft sind.

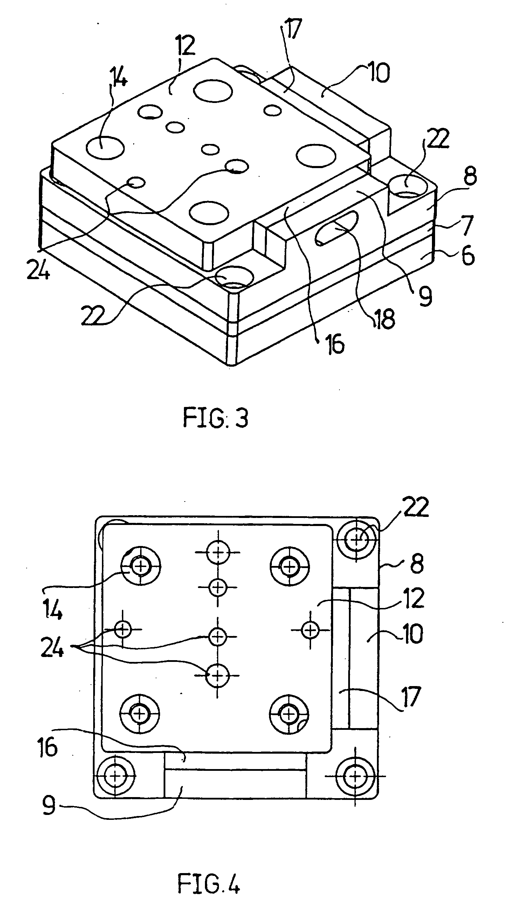

Mit 24 sind in Fig. 3 und 4 Bohrungen für die Befestigung unterschiedlicher Kontaktelemente auf der Fußplatte 12 bezeichnet.

Bei der Montage der in Fig. 1 gezeigten Halterung werden zunächst die Trägersäule mit den Trägerköpfen an gewünschten Positionen auf der Basisplatte 1 montiert. Ergibt eine Vermessung der Position der Kontaktelemente, daß die Position zur Anpassung an ein auf die Halterung aufzulegendes Werkstück korrigiert werden muß, so besteht die Möglichkeit, durch Auswechslung des Abstandsstücks 7 sowie der Abstandsstücke 16,17 die Position des Kontaktelements in vertikaler Richtung sowie in zwei zueinander senkrechten horizontalen Richtungen zu verstellen.

Zur Auswechslung des Abstandsstücks 7 werden die Schrauben 11 gelöst und ein davon in der Dicke abweichendes Abstandsstück aus dem genannten Satz zwischen der Grundplatte 6 und der Zwischenplatte 8 angeordnet.

Zur Auswechslung des Abstandsstücks 16 oder 17 werden beide Schrauben 19 gelöst. Die Langlöcher 18 in den Anschlagbacken 9,10 bieten den erforderlichen Freiraum für die mit der Auswechslung der Abstandsstücke 16,17 verbundenen Verschiebung der jeweils anderen Schraube 19. Ferner sind die Schrauben 15 zu lösen, um eine Verschiebung der Fußplatte 12 zu ermöglichen. Nach Auswechslung eines oder jedes der Abstandsstücke 16,17 werden die Schrauben 19 angezogen, so daß die Fußplatte 12 in die durch die neuen Abstandsstücke 16,17 bestimmte horizontale Position gelangt. Abschließend wird die Fußplatte 12 in der neuen Position durch Anziehen der Schrauben 15 fixiert. Das Spiel der Schrauben 14 in den Bohrungen 14 ermöglicht die genannte Verschiebung der Fußplatte 12. Die genaue Position der Fußplatte 12 und des durch die Fußplatte über den Trägeransatz 13 gehaltenen Kontaktelements 4 ist damit neu festgelegt.

## Patentansprüche

1. Halterungsvorrichtung (1-3) zum Halten eines Werkstücks (5), insbesondere eines Karosseriebauteils, in einer Bezugsposition, die einen Trägerkopft (3) mit einer ein Kontaktelement (4) zum Anlegen an das Werkstück (5) umfassenden Baueinheit (4,12,13) aufweist, wobei die Baueinheit (4,12,13) durch einen Satz auswechselbarer Abstandsstücke (7,16,17) relativ zu einem den Trägerkopf (3) aufnehmenden Basisteil (2) in allen drei Raumrichtungen verstellbar ist,
**dadurch gekennzeichnet,**
**dass** der Trägerkopf (3) eine Zwischenplatte (8) umfasst, an deren eine Platten Plattenebene die Baueinheit (4,12,13) unmittelbar anlegbar und auf der die Baueinheit (4,12,13) parallel zur Plattenebene in zwei zueinander senkrechten Raumrichtungen unter Verstellung durch die betreffenden Abstandsstücke (16,17) verschiebbar ist, und dass die Baueinheit (4,12,13) in der dritten, zur Plattenebene senkrechten Raumrichtung unter Anordnung der betreffenden Abstandsstücke (7) auf der der Baueinheit (4,12,13) abgewandten Seite der Zwischenplatte (8) gemeinsam mit der Zwischenplatte (8) verstellbar ist.

2. Halterungsvorrichtung nach Anspruch 1,
**dadurch gekennzeichnet,**
**dass** der Satz von Abstandsstücken (7,16,17) Abstandsstücke mit in einer Raumrichtung um eine Rasterlänge abgestuften Abmessungen umfasst.

3. Halterungsvorrichtung nach Anspruch 1 oder 2,
**dadurch gekennzeichnet,**
**dass** der Trägerkopf (3) eine an das Basisteil (2) anlegbare Grundplatte (6) umfasst.

4. Halterungsvorrichtung nach Anspruch 3,
**dadurch gekennzeichnet,**
**dass** die zur Anordnung auf der der Baueinheit (4,12,13) abgewandten Seite der Zwischenplatte (8) vorgesehenen Abstandsstücke (7) plattenförmig und deckungsgleich mit der Grundplatte (6) ausgebildet sind.

5. Halterungsvorrichtung nach Anspruch 4,
**dadurch gekennzeichnet,**
**dass** die plattenförmigen Abstandsstücke (7) und ggf. die Zwischenplatte (8), vorzugsweise durch Schrauben (11), auf der Grundplatte (6) fixierbar sind.

6. Halterungsvorrichtung nach einem der Ansprüche 1 bis 5,
**dadurch gekennzeichnet,**
**dass** die Baueinheit (4,12,13) über ein Fußteil (12) an der Zwischenplatte (8) anliegt.

7. Halterungsvorrichtung nach einem der Ansprüche 1 bis 6,
**dadurch gekennzeichnet,**
**dass** die Zwischenplatte (8) vorstehende Anschlagbacken (9,10) aufweist und die Abstandsstücke (16,17) zur Verschiebung der Baueinheit (4,12,13) in der Plattenebene zur Anordnung zwischen den Anschlagbacken (9,10) und der Baueinheit (4,12,13) vorgesehen sind.

8. Halterungsvorrichtung nach einem der Ansprüche 1 bis 7,
**dadurch gekennzeichnet,**
**dass** die Baueinheit (4,12,13) auf der Zwischenplatte (8), vorzugsweise durch Schrauben (15), fixierbar ist.

9. Halterungsvorrichtung nach einem der Ansprüche 6 bis 8,
**dadurch gekennzeichnet,**
**dass** das Fußteil (12) plattenförmig mit Durchgangsbohrungen (14) ausgebildet ist, in denen zur Fixierung des Fußteils (11) auf der Zwischenplatte (8) vorgesehene Schrauben (15) ein Spiel aufweisen.

10. Halterungsvorrichtung nach einem der Ansprüche 7 bis 9,
**dadurch gekennzeichnet,**
**dass** die zur Verschiebung in der Plattenebene vorgesehenen Abstandsstücke (16,17) zwischen den Anschlagbacken (9,10) und der Baueinheit (4,12,13), vorzugsweise mittels durch ein Langloch (18) in den Anschlagbacken (9,10) geführter Schrauben (19), fixierbar sind.

11. Halterungsvorrichtung nach einem der Ansprüche 5 bis 10,
**dadurch gekennzeichnet,**
**dass** die genannten Schrauben (11,15,19) einen durch ein Spezialwerkzeug zu drehenden Schraubenkopf aufweisen.

## Claims

1. Support device (1-3) for holding a workpiece (5), in particular a body component, in a reference position, the support device having a carrier head (3) with a constructional unit (4, 12, 13) which comprises a contact element (4) for placing against the workpiece (5), wherein the constructional unit (4, 12, 13) is adjustable in all three directions in space relative to a base part (2), which holds the carrier head (3), by means of a set of interchangeable spacers (7, 16, 17), **characterized in that** the carrier head (3) comprises an intermediate plate (8), against the one plate plane of which the constructional unit (4, 12, 13) can be directly placed and on which the constructional unit (4, 12, 13) can be displaced parallel to the plate plane in two mutually perpendicular directions in space by adjustment by means of the relevant spacers (16, 17), and **in that** the constructional unit (4, 12, 13) can be adjusted together with the intermediate plate (8) in the third direction in space, which is perpendicular to the plate plane, by arrangement of the relevant spacers (7) on that side of the intermediate plate (8) which faces away from the constructional unit (4, 12, 13).

2. Support device according to Claim 1, **characterized in that** the set of spacers (7, 16, 17) comprises spacers having dimensions which are graduated by a grid length in one direction in space.

3. Support device according to Claim 1 or 2, **characterized in that** the carrier head (3) comprises a base plate (6) which can be placed against the base part (2).

4. Support device according to Claim 3, **characterized in that** the spacers (7) provided for arrangement on that side of the intermediate plate (8) which faces away from the constructional unit (4, 12, 13) are designed to be plate-like and congruent with the base plate (6).

5. Support device according to Claim 4, **characterized in that** the plate-like spacers (7) and, if appropriate, the intermediate plate (8) can be fixed on the base plate (6), preferably by screws (11).

6. Support device according to one of Claims 1 to 5, **characterized in that** the constructional unit (4, 12, 13) bears against the intermediate plate (8) via a foot part (12).

7. Support device according to one of Claims 1 to 6, **characterized in that** the intermediate plate (8) has protruding stop jaws (9, 10), and the spacers (16, 17) are provided for displacement of the constructional unit (4, 12, 13) in the plate plane for arrangement between the stop jaws (9, 10) and the constructional unit (4, 12, 13).

8. Support device according to one of Claims 1 to 7, **characterized in that** the constructional unit (4, 12, 13) can be fixed on the intermediate plate (8), preferably by screws (15).

9. Support device according to one of Claims 6 to 8, **characterized in that** the foot part (12) is designed to be plate-like with passage bores (14) in which screws (15) provided for fixing the foot part (11) on the intermediate plate (8) have play.

10. Support device according to one of Claims 7 to 9, **characterized in that** the spacers (16, 17) which are provided for displacement in the plate plane can be fixed between the stop jaws (9, 10) and the constructional unit (4, 12, 13), preferably by means of screws (19) guided through an elongated hole (18) in the stop jaws (9, 10).

11. Support device according to one of Claims 5 to 10, **characterized in that** the abovementioned screws (11, 15, 19) have a screw head which can be rotated by a special tool.

## Revendications

1. Dispositif de fixation (1-3) pour fixer une pièce (5), en particulier une pièce de carrosserie, dans une position de référence, qui présente une tête support (3) avec une unité modulaire (4, 12, 13) comprenant un élément de contact (4) contre lequel la pièce (5) est placée, l'unité modulaire (4, 12, 13) pouvant être réglée par une série de pièces d'écartement (7, 16, 17) échangeables par rapport à une pièce de base (2) reprenant la tête support (3) dans les trois directions de l'espace, **caractérisé**
**en ce que** la tête support (3) comprend une plaque intermédiaire (8), l'unité modulaire (4,12,13) pouvant se placer directement contre un plan de plaque de celle-ci et l'unité modulaire (4,12,13) peut être déplacée sur celle-ci parallèlement au plan de plaque, dans deux directions de l'espace, perpendiculaires l'une à l'autre, avec un réglage par lesdites pièces d'écartement (16,17) et en ce que l'unité modulaire (4,12,13) peut être réglée, ensemble avec la plaque intermédiaire (8), dans la troisième direction de l'espace, perpendiculaire au plan de la plaque, en agençant lesdites pièces d'écartement (7) sur la face opposée à l'unité modulaire (4,12,13) de la plaque intermédiaire (8).

2. Dispositif de fixation selon la revendication 1, **caractérisé en ce que** la série de pièces d'écartement (7,16,17) comprend des pièces d'écartement avec des dimensions qui diminuent graduellement dans une direction de l'espace d'une longueur modulaire.

3. Dispositif de fixation selon la revendication 1 ou 2, **caractérisé en ce que** la tête support (3) comprend une plaque de base (6) pouvant être disposée sur la pièce de base (2).

4. Dispositif de fixation selon la revendication 3, **caractérisé en ce que** les pièces d'écartement (7) prévues pour une disposition sur la face de la plaque intermédiaire (8) opposée à unité modulaire (4,12,13) sont réalisées en forme de plaque et affleurantes avec la plaque de base (6).

5. Dispositif de fixation selon la revendication 4, **caractérisé en ce que** les pièces d'écartement (7) en forme de plaque et le cas échéant la plaque intermédiaire (8) peuvent être fixées sur la plaque de base (6), de préférence au moyen de vis (11).

6. Dispositif de fixation selon l'une quelconque des revendications 1 à 5, **caractérisé**
**en ce que** l'unité modulaire (4,12,13) est placée via une pièce formant un pied (12) sur la plaque intermédiaire (8).

7. Dispositif de fixation selon l'une quelconque des revendications 1 à 6, **caractérisé**
**en ce que** la plaque intermédiaire (8) présente des butées d'arrêt (9,10) en saillie et les pièces d'écartement (16,17) sont prévues pour le déplacement de l'unité modulaire (4,12,13) dans le plan de plaque pour une disposition entre les butées d'arrêt (9,10) et l'unité modulaire (4,12,13).

8. Dispositif de fixation selon l'une quelconque des revendications 1 à 7, **caractérisé**
**en ce que** l'unité modulaire peut (4,12,13) être fixée sur la plaque intermédiaire (8), de préférence au moyen de vis (15).

9. Dispositif de fixation selon l'une quelconque des revendications 6 à 8, **caractérisé**
**en ce que** la pièce formant le pied (12) est réalisée en forme de plaque avec des trous (14) dans lesquels des vis (15) prévues pour la fixation de la pièce formant le pied (11) sur la plaque intermédiaire (8) présentent un jeu.

10. Dispositif de fixation selon l'une quelconque des revendications 7 à 9, **caractérisé**
**en ce que** les pièces d'écartement (16,17) prévues pour le déplacement dans le plan de plaque entre les butées d'arrêt (9,10) et l'unité modulaire (4,12,13), peuvent être fixées de préférence au moyen de vis (19) guidées au travers d'un trou oblong (18) dans les butées d'arrêt (9,10).

11. Dispositif de fixation selon l'une quelconque des revendications 5 à 10, **caractérisé**
**en ce que** les vis mentionnées (11,15,19) présentent une tête de vis à faire tourner à l'aide d'un outil spécial.
